# EUROPÄISCHE PATENTSCHRIFT

(11) **EP 0 525 439 B1**
(45) Veröffentlichungstag und Bekanntmachung des Hinweises auf die Patenterteilung: **02.11.1994**
(21) Anmeldenummer: 92111338.7
(22) Anmeldetag: 03.07.1992
(51) Int. Cl.: F16D 65/12

(54) **Bremsscheibe**
Brake disc
Disque de frein

(30) Priorität: 29.07.1991 DE 4125064
(43) Veröffentlichungstag der Anmeldung: 03.02.1993
(73) Patentinhaber: Linde Aktiengesellschaft, 65189 Wiesbaden (DE); AUDI AG, 85045 Ingolstadt (DE)
(72) Erfinder: Heinrich, Peter, W-8034 Germering (DE); Heck, Klaus, W-8070 Ingolstadt (DE)
(74) Vertreter: Schaefer, Gerhard, Dr.

(56) Entgegenhaltungen:
- EP-A- 0 419 684
- WO-A-80/00736
- DE-B- 2 254 653
- US-A- 2 747 701
- SOVIET INVENTIONS ILLUSTRATED, SECTION P/Q,WEEK E18, 16 JUIN 1982. DERWENT PUBLICATIONS LTD., LONDON, GB.
- SOVIET INVENTIONS ILLUSTRATED SECTION III-MECHANICAL GENERAL, DECEMBER 1971 DERWENT PUBLICATIONS LTD., LONDON. GB.

## Beschreibung

Die Erfindung betrifft eine Bremsscheibe, die aus einem Verbund besteht, der ein inneres, stabiles, metallisches Stützgitter aufweist, dessen Gitterstäbe verschleißfest sind und bei dem die verbleibenden Gitterzwischenräume mit einem Leichtmetall ausgefüllt sind.

Bremsscheiben für PKW, LKW, etc. sind in gängiger Weise einstückig aus Gußeisen gefertigt. Ebenso sind auf das Gewicht bezogen leichtere aber weniger robuste Bremsscheiben aus Aluminium, Titan und Legierungen davon bekannt.

Nachteilig bei den bekannten Bremsscheiben ist im Falle des Gußeisens das Gewicht und bei den zweitgenannten Leichtmetallbremsscheiben deren vergleichsweise geringe Belastbarkeit hinsichtlich Hitze, Korrosion und Abrieb und deren geringe mechanische Stabilität.

Aus der EP-A 0 419 684 ist ferner eine Bremsscheibe bekannt, die ein inneres Gerüst aus einem stabilen, verschleißfesten Werkstoff aufweist, wobei das Gerüst in einer Matrix aus einem gut wärmeleitfähigen Material untergebracht ist und wobei die Stirnflächen des Gerüsts bis an die Oberfläche der aus Matrix und Gerüst gebildeten Bremsscheibe reichen.

Die Aufgabenstellung vorliegender Erfindung besteht darin, eine Bremsscheibe anzugeben, die zum einen ein möglichst geringes Gewicht besitzt und die zum anderen hinsichtlich Eigenschaften wie Verschleiß-, Hitze, Korrosions- und Abriebfestigkeit sowie mechanischer Stabilität besonders hochwertig ist.

Diese Aufgabenstellung wird gemäß der Erfindung mit einer Bremsscheibe gelöst, die aus einem Verbund besteht, der ein inneres, stabiles, metallisches Stützgitter aufweist, wobei die Gitterstäbe jedoch mit einer verschleißfesten, thermisch gespritzten Schicht versehen sind und bei dem im übrigen die verbleibenden Gitterzwischenräume mit einem Leichtmetall ausgefüllt sind.

Eine so ausgelegte Bremsscheibe besitzt die gewünschten Eigenschaften in hohem Maße. Zum einen wird die mechanische Stabilität durch das Stützgitter bewirkt, während gleichzeitig durch dieses die gute Wärmeableitung nicht gestört wird. Die auf die Gitterstäbe aufgetragene, verschleißfeste Schicht trägt insbesondere zur Erhöhung der Verschleißfestigkeit und Abriebstabilität der Bremsscheibe bei. Schließlich bewirkt die Auffüllung der Gitterzwischenräume mit Leichtmetall das im Vergleich zu Gußeisenbremsscheiben deutlich reduzierte Gewicht.

Die thermisch gespritzte, verschleißfeste Schicht ist günstig, da die zugehörigen Auftragsverfahren wie z.B. Flammspritzen und Hochgeschwindigkeitsflammspritzen, Plasmaspritzen und Lichtbogenspritzen schnelle und ökonomische Auftragsverfahren für derartige, Oberflächenschichten sind.

Die verschleißfeste Schicht auf den Stützgitterstäben kann prinzipiell aus den verschiedensten,bekannten, verschleißfesten Beschichtungsmaterialien bestehen, z.B. aus entsprechenden Stählen, Molybdän oder auch Wolframcarbide enthaltende Beschichtungen.Vielen hier relevanten Anforderungen werden Schichten aus Chromstahl in besonderem Maße gerecht. Als geeignete, leichtgewichtige Füllmaterialien für die Gitterzwischenräume haben sich die Leichtmetalle Aluminium, Titan oder Legierungen davon bewährt.

Ein günstiges Verfahren zur Herstellung einer erfindungsgemäßen Bremscheibe besteht darin, daß ein geeignet ausgelegtes Stützgitter vorgelegt wird und die verschleißfeste Schicht auf den Gitterstäben mittels einer thermischen Spritzmethode, vorzugsweise dem autogenen Flammspritzen oder Hochgeschwindigkeitsflammspritzen (HGFS) aufgebracht wird und daß die Ausfüllung der verbleibenden Gitterzwischenräume des beschichteten Stützgitters durch Umgießen des Stützgitters mit besagten Leichtmetallen bewerkstelligt wird, woran sich eine Oberflächennachbearbeitung, beispielsweise ein Plandrehvorgang, bei Bedarf anschließt.

Diese Herstellungsweise stellt zwar einen gewissen Mehraufwand im Vergleich zur Produktion altbekannter Bremsscheiben dar, jedoch ergibt sich aufgrund des Aufbaus der Bremsscheibe aus mehreren Teilelementen und den zughörigen Produktionsstufen die Möglichkeit, Bremsscheibeneigenschaften durch Variation entsprechender Teilelemente und deren Herstellungsweise in gewünschte Richtungen zu optmieren zu können. Beispielsweise kann durch die Anwendung verschieden verschleißfester Oberflächenschichten die Abriebfestigkeit der entstehenden Bremsscheibe variiert werden.

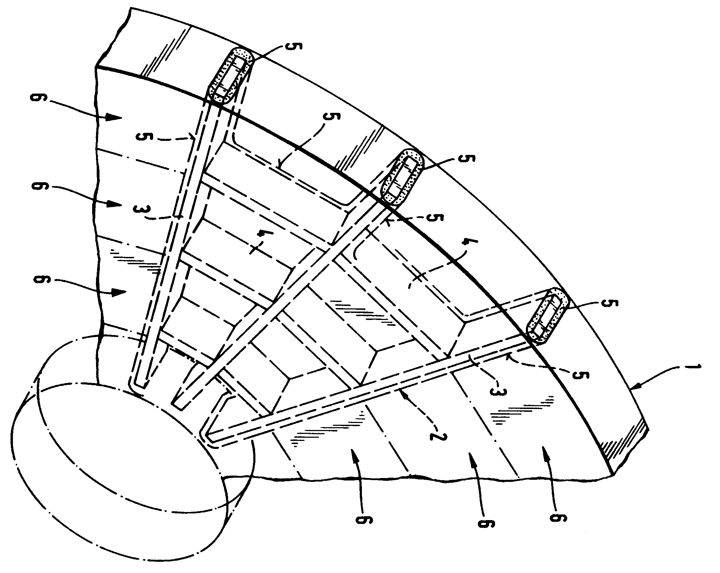

Anhand der Figur soll die Erfindung beispielhaft näher erläutert werden.

Die Figur zeigt etwa einen Viertelteil einer erfindungsgemäßen Bremsscheibe 1 mit einem darin angeordneten, gestrichelt angedeuteten Stützgitter 2. Das Stützgitter weist im gezeigten Fall radiale 3 und konzentrische Stäbe 4 auf. Eine derartige Stützgittergeometrie ist für die in der Regel kreissymmetrischen Bremsscheiben günstig, es sind jedoch auch andere Stützgittergeometrien oder Tragwerke geeignet, beispielsweise rechteckgitterartige Stützgitter oder dünne Vollscheiben mit beidseitig darauf befestigten, gegenseitig beabstandeten,senkrechten oder auch geneigten Lamellen.

Die Gitterstäbe 3,4 oder auch gegfs. vorhandene Lamellen sind allseitig zB.von einer verschleißfesten Chromstahlschicht 5 umgeben, die - nach einer Nachbearbeitung oder zumindest nach einer gewissen Betriebszeit - auch an der Oberfläche der Bremsscheibe sichtbar wird. Diese Verschleißschicht ist mit einem Flammspritzverfahren etwa gemäß dem der US-PS 2,861,900 auf das Stützgitter aufgetragen, d.h. z.B. daß Chromstahlspritzmaterial etwa mit einem Acetylen-Sauerstoff-Verbrennungsgasstrom auf die entsprechenden Flächen aufgebracht wird, wobei vorzugsweise mit Spritzpartikelgeschwindigkeiten von 100 bis 150 m/sec garbeitet und eine Dicke von vorzugsweise 0.5 bis 3 mm aufgetragen wird. Die vom Stützgitter 2 und der verschleißfesten Schicht 5 nicht beanspruchten Volumina 6 sind mit Aluminium ausgefüllt, welches in einem Gießvorgang mit einer entsprechenden Gießform, in die das Stützgitter mit den beschichteten Streben einlegbar ist, eingebracht wird. Der Auftragsvorgang für die verschleißfeste Schicht wird bei dem gezeigten Gitter mit Vorteil in schräger Richtung bezüglich der Bremsscheibenmittelachse und zudem mit variierender Richtung durchgeführt. So werden auch die innenseitigen Bereiche der Streben 3,4 gleichmäßig und hochwertig beschichtet.

Speziell die Abriebfestigkeit wird bei den erfindungsgemäßen Bremsscheiben wesentlich von der aufgetragenen Verschleißschicht 5 bestimmt, wobei die Abriebfestigkeit auch dann erhalten bleibt, wenn die Gitterstreben durch längeren Betrieb freigelegt sind. In dieser Phase wirken die auf den inneren Seitenflächen der Gitterstreben sitzenden verschleißfesten Materiallagen immer noch als abriebfeste Schicht. Die Stützgitter sind mit Vorteil aus Streckmetall und weisen Maschenweiten von einigen Millimetern bis in den Zentimeterbereich auf. Insgesamt weisen solche Bremsscheiben alle Eigenschaften hochbeanspruchbarer Bremsscheiben bei vergleichsweise niedrigem Gewicht auf.

## Patentansprüche

1. Bremsscheibe,
die aus einem Verbund besteht, der ein inneres, stabiles, metallisches Stützgitter (2) aufweist, dessen Gitterstäbe verschleißfest sind und
bei dem die verbleibenden Gitterzwischenräume (6) mit einem Leichtmetall ausgefüllt sind,
dadurch gekennzeichnet,
daß die Gitterstäbe mit einer verschleißfesten, thermisch gespritzten Schicht (5) versehen sind.

2. Bremsscheibe nach Anspruch 1, dadurch gekennzeichnet, daß die verschleißfeste Schicht aus Chromstahl besteht.

3. Bremsscheibe nach einem der Ansprüche 1 bis 2, dadurch gekennzeichnet, daß das die Gitterzwischenräume ausfüllende Leichtmetall Aluminium, Titan oder eine Legierung davon ist.

4. Verfahren zur Herstellung einer Bremsscheibe nach einem oder mehreren der Ansprüche 1 bis 3, dadurch gekennzeichnet,
daß ein geeignet ausgelegtes, umgießbares Stützgitter (2) vorgelegt wird,
daß die verschleißfeste Schicht (5) auf den Gitterstäben mittels einer thermischen Spritzmethode, vorzugsweise dem autogenen Flammspritzen oder Hochgeschwindigkeitsflammspritzen (HGFS) aufgebracht wird,
und daß die Ausfüllung der verbleibenden Gitterzwischenräume (6) des beschichteten Stützgitters (2) durch Umgießen des Stützgitter mit besagten Leichtmetallen ausgeführt wird, woran sich gegebenenfalls eine Oberflächennachbearbeitung anschließt.

## Claims

1. Brake disc which consists of a composite construction which exhibits an inner strong metallic supporting grating (2) the grating bars of which are resistant to wear and in which the remaining grating interspaces (6) are filled with a light metal, characterised in that the grating bars are provided with a wear-resistant thermally sprayed coating (5).

2. Brake disc according to claim 1, characterised in that the wear-resistant coating consists of chrome steel.

3. Brake disc according to one of claims 1 to 2, characterised in that the light metal filling the grating interspaces is aluminium, titanium or an alloy thereof.

4. Method for manufacturing a brake disc according to one or more of claims 1 to 3, characterised in that a suitably designed supporting grating (2) around which material can be cast is provided, in that the wear-resistant coating (5) is applied to the grating bars by means of a thermal spraying method, preferably oxyacetylene flame spraying or high-speed flame spraying (HGFS), and in that the filling of the remaining grating interspaces (6) of the coated supporting grating (2) is effected by casting said light metals around the supporting grating, followed if necessary by a surface finishing operation.

## Revendications

1. Disque de frein, composé d'un composite qui présente une grille support (2) intérieure, stable et métallique et dont les barreaux de grille sont résistants à l'usure et dans laquelle les intervalles de grille (6) restants sont remplis avec un métal léger, caractérisé en ce que
les barreaux de grille sont pourvus d'une couche (5) injectée thermiquement et résistant à l'usure.

2. Disque de frein selon la revendication 1, caractérisé en ce que la couche résistant à l'usure est composée d'acier au chrome.

3. Disque de frein selon l'une des revendications 1 à 2, caractérisé en ce que le métal léger, remplissant les intervalles de grille, est de l'aluminium, du titane ou un alliage de ces métaux.

4. Procédé de fabrication d'un disque de frein selon l'une ou plusieurs des revendications 1 à 3, caractérisé en ce qu'il est prévu une grille-support (2), de conception appropriée, pouvant être recouverte et enrobée, la couche (5) résistant à l'usure est placée sur les barreaux de grille, au moyen d'une méthode d'injection thermique, de préférence par vaporisation/pulvérisation autogène à la flamme seule ou à la flamme à haute vitesse (HGFS), et le remplissage des intervalles de grille (6) restants de la grille-support (2) recouverte est réalisé par enrobage de la grille-support avec les métaux légers mentionnés, auquel s'ajoute, le cas échéant, un retraitement de surface.
